# EUROPÄISCHE PATENTSCHRIFT

(11) **EP 1 439 115 B1**
(45) Veröffentlichungstag und Bekanntmachung des Hinweises auf die Patenterteilung: **08.06.2011**
(21) Anmeldenummer: 04000522.5
(22) Anmeldetag: 13.01.2004
(51) Int. Cl.: B62J 15/02

(54) **Einrichtung zur Befestigung von Streben zur Halterung eines Radschützers am Rahmen eines Zweirades**
Device for fixing struts for the fixation of a wheel guard to the frame of a bicycle
Dispositif de fixation de montants pour la fixation d'un garde-boue au châssis d'une bicyclette

(30) Priorität: 17.01.2003 DE 20300726 U
(43) Veröffentlichungstag der Anmeldung: 21.07.2004
(73) Patentinhaber: sks metaplast Scheffer-Klute GmbH, 59846 Sundern (DE)
(72) Erfinder: Kordes, Sven, 59846 Sundern (DE)
(74) Vertreter: Basfeld, Rainer

(56) Entgegenhaltungen:
- EP-A1- 0 962 382
- EP-A1- 1 036 731
- DE-A1- 4 232 539
- DE-U1- 29 607 628

## Beschreibung

Die vorliegende Erfindung betrifft eine Einrichtung zur Befestigung von Streben zur Halterung eines Radschützers am Rahmen eines Zweirades gemäß dem Oberbegriff des Anspruchs 1. Die vorliegende Erfindung betrifft weiterhin eine Anordnung einer Einrichtung zur Befestigung an einer Strebe zur Halterung eines Radschützers am Rahmen eines Zweirades gemäß dem Oberbegriff des Anspruchs 9.

Eine Einrichtung der vorgenannten Art ist aus der europäischen Patentanmeldung EP 0 962 382 A1 bekannt. Bei der darin beschriebenen Einrichtung ist das erste Teil als Anschlussteil mit einer Aufnahme und das zweite Teil als Einsteckteil mit einem in die Aufnahme einsteckbaren Abschnitt ausgebildet, wobei durch Einstecken dieses Abschnittes in die Aufnahme die lösbare Verbindung zwischen beiden Teilen gebildet wird. Diese Verbindung ist als Rastverbindung ausgebildet. Die Verrastung geschieht dadurch, dass die Aufnahme zumindest abschnittsweise eine hohlkugelförmige Innenkontur aufweist und das gleichzeitig der einsteckbare Abschnitt des Einsteckteils eine zumindest teilweise kugelförmige Außenkontur aufweist. Durch das Ineinandergreifen der hohlkugelförmigen Innenkontur und der kugelförmigen Außenkontur wird eine Verbindung zwischen den beiden Teilen geschaffen, bei der die beiden Teile beliebig, insbesondere um zwei zueinander senkrechte Achsen gegeneinander verschwenkbar sind. Diese Verbindung bietet den Vorteil, dass die lösbare Verbindung auch dann gelöst werden kann, wenn Kräfte schräg in die Verbindung eingeleitet werden. Derartige schräge Krafteinleitungen kommen in der Praxis vergleichsweise häufig vor, so dass durch die aus dem Stand der Technik bekannte Einrichtung eine sinnvolle lösbare Verbindung geschaffen wird.

Als nachteilig bei diesem Stand der Technik erweist sich, dass aufgrund der Verschwenkbarkeit der mindestens zwei zueinander senkrechte Richtungen bzw. der Bewegungsfreiheit der beiden Teile in zueinander senkrechten Richtungen Schwingungen bei der Einrichtung auftreten können, die sich als sehr störend auswirken können.

Aus der DE 42 32 539 A1 sind vergleichbare Einrichtungen zur Befestigung von Streben zur Halterung eines Radschützers am Rahmen eines Zweirades bekannt. Bei dem darin beschriebenen Zweirad umfasst eine der Einrichtungen eine Aufnahme und ein Einsteckteil, die eine Rastverbindung eingehen können. Über die Rastverbindung können die Streben des Vorderradschützers an der Vorderradgabel befestigt werden. In die Aufnahme kann ein mit einer teilweise kugelförmigen Außenkontur versehener Abschnitt des Einsteckteils eingebracht werden. Ein weiterer Teil des in die Aufnahme einbringbaren Abschnitts weist eine konische Außenkontur auf, wobei sich die Konusachse in Verbindungsrichtung der Rastverbindung erstreckt. Die für Streben des Hinterradschützers vorgesehene Einrichtung umfasst einen Schnellverschluss, bei dem ein zylindrischer Abschnitt des Einsteckteils in die Aufnahme eingreift. Die Zylinderachse des zylindrischen Abschnitts erstreckt sich dabei in Verbindungsrichtung.

Aus der EP 1 036 731 A1 ist eine Einrichtung zur Befestigung von Streben an einem Radschützer eines Zweirades bekannt. Die Einrichtung umfasst eine an dem Radschützer anbringbare, teilweise hohlzylindrische Aufnahme, in die das zylindrische Ende der Strebe eingeschoben werden kann. Dabei erstreckt sich die Zylinderachse der hohlzylindrischen Aufnahme koaxial zu der Strebe und damit in Verbindungsrichtung. Die Strebe kann in der Aufnahme durch einen Verriegelungsknopf gesichert werden, der zwei Klemmbacken aufweist, die mit einer Innenverzahnung versehen sind und die abschnittsweise verzahnte Strebe umgreifen können.

Das der vorliegenden Erfindung zugrunde liegende Problem ist die Schaffung einer Einrichtung der eingangs genannten Art, die vergleichsweise stabil aufgebaut ist und trotzdem eine Lösung der lösbaren Verbindung auch bei schräger Krafteinleitung ermöglicht. Weiterhin soll eine entsprechende Anordnung der eingangs genannten Art angegeben werden.

Dies wird erfindungsgemäß hinsichtlich der Einrichtung durch eine Einrichtung der eingangs genannten Art mit den kennzeichnenden Merkmalen des Anspruchs 1 sowie hinsichtlich der Anordnung durch eine Anordnung der eingangs genannten Art mit den kennzeichnenden Merkmalen des Anspruchs 9 erreicht. Die Unteransprüche betreffen bevorzugte Ausgestaltungen der Erfindung.

Durch eine derartige hohlzylindrische Innenkontur und eine mit dieser zusammenwirkende zylindrische Außenkontur hat die Verbindung nur noch Bewegungsfreiheit in einer Schwenkrichtung, so dass das System wesentlich stabiler ist als die Verbindung der aus dem Stand der Technik bekannten Einrichtung. Durch die Ausrichtung der Zylinderachsen, um die eine Verschwenkung von erstem Teil gegenüber zweitem Teil möglich ist, werden die in der Praxis vorkommenden schrägen Krafteinleitungen in die zu lösende Verbindung ermöglicht.

Dabei können das erste Teil und das zweite Teil um die im wesentlichen zusammenfallenden Zylinderachsen von hohlzylindrischer Innenkontur und zylindrischer Außenkontur gegeneinander verschwenkt werden. Eine schräge Krafteinleitung zur Lösung der Verbindung von erstem Teil und zweitem Teil ist somit immer noch möglich in einer Richtung, die senkrecht zu den Zylinderachsen ausgerichtet ist. Gleichzeitig wird durch das Ineinandergreifen der hohlzylindrischen Innenkontur und der zylindrischen Außenkontur eine vergleichsweise stabile und nicht schwingende Verbindung zwischen dem ersten Teil und dem zweiten Teil geschaffen.

Es besteht erfindungsgemäß die Möglichkeit, dass das erste Teil die Aufnahme und das zweite Teil den Einsteckabschnitt aufweisen. Alternativ dazu kann auch das erste Teil den Einsteckabschnitt und das zweite Teil die Aufnahme aufweisen.

Gemäß einer bevorzugten Ausführungsform der vorliegenden Erfindung ist die hohlzylindrische Innenkontur beabstandet zu dem Ende der Aufnahme angeordnet, das dem mit dem Einsteckabschnitt versehenen Teil zugewandt ist. Durch die Wahl des Abstandes der hohlzylindrischen Innenkontur vom Ende der Aufnahme kann die Größe der Kraft vorgegeben werden, mit der die beiden Teile auseinandergezogen werden müssen, um ein Lösen der Verbindung zu bewirken. Die Größe der Kraft kann weiterhin insbesondere dadurch vorgegeben werden, dass der Innendurchmesser der hohlzylindrischen Innenkontur nicht genau dem Außendurchmesser der zylindrischen Außenkontur entspricht, sondern etwas größer als dieser gewählt wird. Je größer der Unterschied zwischen Innendurchmesser der Innenkontur und Außendurchmesser der Außenkontur gewählt wird, desto kleiner ist die Kraft, bei der die Verbindung gelöst wird.

Wie bei dem Stand der Technik kann durch das Einbringen des Einsteckabschnitts in die Aufnahme die lösbare Verbindung zwischen erstem Teil und zweitem Teil gebildet werden. Insbesondere kann wie bei dem Stand der Technik die lösbare Verbindung zwischen erstem und zweitem Teil als Rastverbindung ausgebildet sein.

Erfindungsgemäß besteht die Möglichkeit, dass das zweite Teil an der dem Einsteckabschnitt gegenüberliegenden Seite ein Ringteil mit einer konzentrischen Mittelbohrung aufweist zur Aufnahme eines Befestigungselementes zur Befestigung des zweiten Teils an einem Teil des Fahrradrahmens. Das zweite Teil kann dadurch beispielsweise an einer Strebe des Fahrradrahmens befestigt werden, beispielsweise in Höhe der Radnabe.

Vorzugsweise kann weiterhin vorgesehen sein, dass das erste Teil mindestens eine von der Aufnahme für den Einsteckabschnitt verschiedene weitere Aufnahme umfasst, von der das mindestens eine Teilstück der mindestens einen Strebe zur Halterung des Radschützers aufgenommen werden kann. Diese mindestens eine weitere Aufnahme kann vorzugsweise auf der von der Aufnahme für den Einsteckabschnitt abgewandten Seite des ersten Teils angeordnet sein. Diese mindestens eine weitere Aufnahme kann insbesondere als rohrförmige Aufnahme für Teilstücke der beispielsweise als Draht ausgeführten Strebe ausgebildet sein.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Draufsicht auf eine erfindungsgemäße Einrichtung zur Befestigung von Streben zur Halterung eines Radschützers mit einer daran befestigten Strebe;
- Fig. 2: einen Schnitt gemäß den Pfeilen II - II in Fig. 1;
- Fig. 3: einen Längsschnitt durch ein als Anschlussteil ausgeführtes erstes Teil der erfindungsgemäßen Einrichtung gemäß Fig. 1;
- Fig. 4: einen Schnitt gemäß den Pfeilen IV - IV in Fig. 3;
- Fig. 5: einen Längsschnitt durch ein als Einsteckteil ausgebildetes zweites Teil der erfindungsgemäßen Einrichtung gemäß Fig. 1;
- Fig. 6: einen Schnitt gemäß den Pfeilen VI - VI in Fig. 5;
- Fig. 7: eine Detailansicht gemäß dem Pfeil VII in Fig. 2.

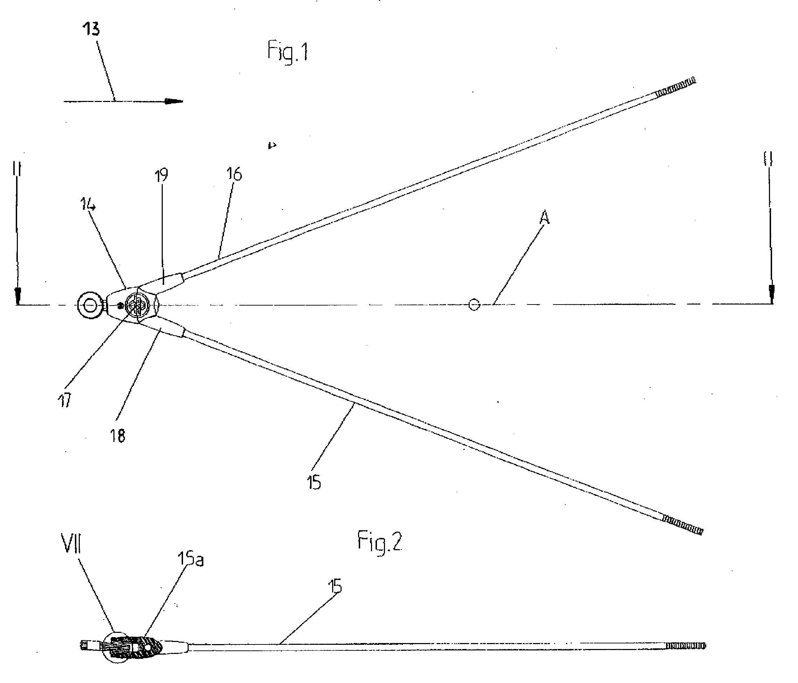

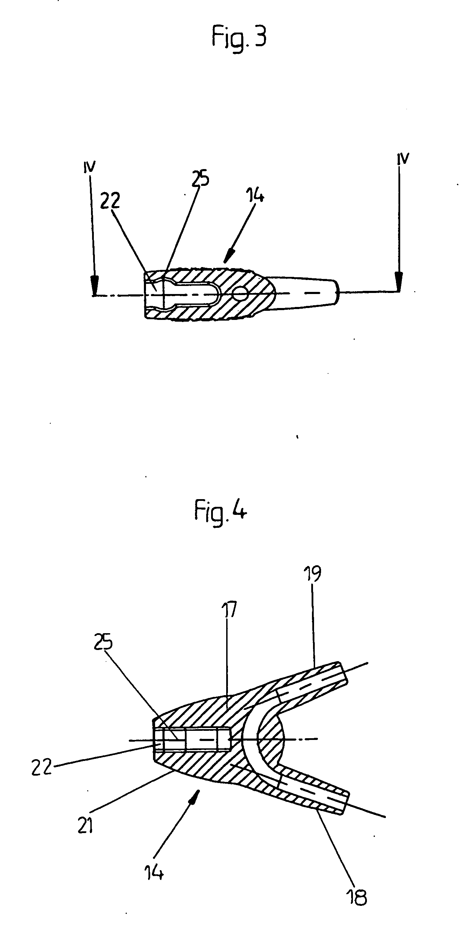

Die erfindungsgemäße Einrichtung zur Befestigung von Streben zur Halterung eines Radschützers gemäß Fig. 1 umfasst ein als Anschlussteil 14 ausgeführtes erstes Teil mit einem Mittelstück 17, von dem aus sich radial nach außen hin zwei Aufnahmen 18, 19 erstrecken, die zumindest abschnittsweise etwa rohrförmig sind (siehe dazu Fig. 4), um jeweils Teilstücke 15, 16 des Strebendrahtes aufzunehmen, wobei letztere ebenso wie die Aufnahmen 18, 19 einen spitzen Winkel einschließen. Man erkennt weiterhin, dass die beiden Enden der Teilstücke 15, 16 der Strebe in dem Anschlussteil 14 zu einer dort gebogenen durchgehenden einzigen Sicherheitsstrebe verbunden sind, wobei der gebogene Abschnitt der Strebe mit 15a bezeichnet ist. Diese Strebe wird in dem Anschlussteil 14 in den Aufnahmen 18, 19 und auch in dem Mittelstück 17 allseitig umschlossen und eingefasst.

Zu der zu den Teilstücken 15, 16 gegenüberliegenden Seite hin erstreckt sich von dem Mittelstück 17 aus eine Anformung 21 des Anschlussteils 14, wobei diese Anformung 21 in dem vorliegenden Ausführungsbeispiel jeweils einen stumpfen Winkel mit den beiden Aufnahmen 18, 19 einnimmt. Diese Anformung 21 hat in dem abgebildeten Ausführungsbeispiel eine Aufnahme 22, in die ein Einsteckabschnitt 23 eines als Einsteckteils 20 ausgebildeten zweiten Teils einschiebbar ist. Die Einsteckrichtung des Einsteckabschnitts 23 in die Aufnahme 22 des Anschlussteils 14 ist in Fig. 1 durch den Pfeil 13 gekennzeichnet.

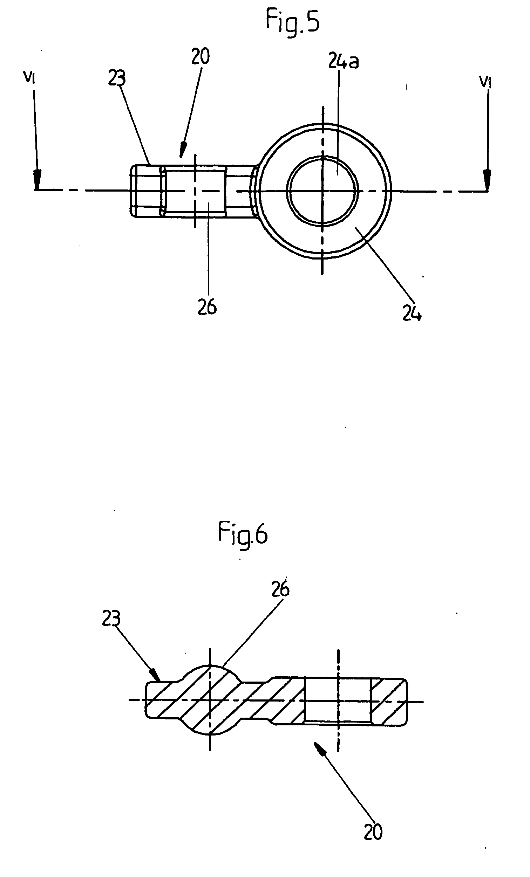

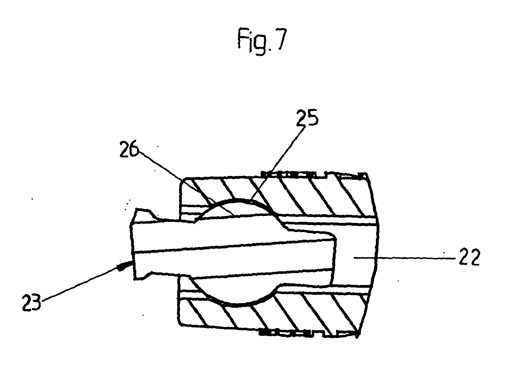

Aus Fig. 3 und Fig. 4 ist ersichtlich, dass die Aufnahme 22 beabstandet von der dem Einsteckteil 20 zugewandten Öffnung eine hohlzylindrische Innenkontur 25 aufweist. Aus Fig. 5 und Fig. 6 ist ersichtlich, dass der Einsteckabschnitt 23 beabstandet von seinem dem Anschlussteil 14 zugewandten Ende eine zylindrische Außenkontur 26 aufweist. Fig. 7 zeigt den Eingriff des Einsteckabschnitts 23 in die Aufnahme 22 im Detail. Insbesondere ist deutlich ersichtlich, dass die zylindrische Außenkontur 26 vergleichsweise passend von der hohlzylindrischen Innenkontur 25 aufgenommen wird. Aufgrund des Ineinandergreifens von Innenkontur 25 und Außenkontur 26 ist das Einsteckteil 20 gegenüber dem Anschlussteil 14 nach oben und unten in Fig. 2, nicht jedoch nach oben und unten in Fig. 1 schwenkbar. Die Schwenkachse, um die herum Einsteckteil 20 gegenüber Anschlussteil 14 schwenkbar ist, entspricht somit den Zylinderachsen der hohlzylindrischen Innenkontur 25 und der zylindrischen Außenkontur 26.

Aus Fig. 5 ist weiterhin ersichtlich, dass das Einsteckteil 20 am anderen Ende ein am Steckfortsatz 23 angeformtes Ringteil 24 aufweist. Dieses Ringteil 24 kann man über eine Schraubverbindung an der Anformung einer Vorderradgabel eines Fahrrads anschrauben, was an sich aus dem Stand der Technik bekannt ist und deshalb nicht dargestellt ist. Dazu hat das Ringteil 24 eine konzentrische Mittelbohrung 24a, die eine Schraube oder auch ein anderes geeignetes Befestigungselement aufnehmen kann. Der Steckfortsatz 23 wird zur Verbindung des Einsteckteils 20 mit dem Anschlussteil 14 in die Aufnahme 22 eingesteckt. Dabei ergibt sich eine Rastverbindung, die bis zu einer bestimmten vorgegebenen Belastungsgrenze fest und auf Zug in Richtung entgegen des in Fig. 1 eingezeichneten Pfeils 13 belastbar ist. Jedoch dann, wenn die Zugkraft, die über die Streben 15, 16 entgegen der Pfeilrichtung von Fig. 1 einwirkt, Einsteckteil 20 und Anschlussteil 14 auseinanderzieht und eine vorgegebene Grenzbelastung überschreitet, löst sich die Rastverbindung. Dies ist der Effekt der gewünschten Sicherheitsbefestigung der Sicherheitsstreben 15, 16, die vom Radschützer (nicht dargestellt) des Fahrrads ausgehen, an der Vorderradgabel (nicht dargestellt) des Fahrrads und somit letztendlich am Rahmen des Fahrrads.

Die Zugkraft, bei der der Einsteckabschnitt 23 aus der Aufnahme 22 herausziehbar ist, ist zum einen von der Elastizität des für die Fertigung des Anschlussteils 14 verwendeten Materials abhängig. Zum anderen kann auch durch die Positionierung der hohlzylindrischen Innenkontur 25 in der Aufnahme 22 die Zugkraft beeinflusst werden. Je weiter die Innenkontur 25 von der dem Einsteckteil 20 zugewandten Öffnung der Aufnahme entfernt ist, um so größer muss die Zugkraft sein, die zu einem Herausziehen des Einsteckabschnittes 23 aus der Aufnahme 22 führt.

Die Besonderheit bei der erfindungsgemäßen Einrichtung liegt darin, dass nicht nur ein Lösen zwischen dem Einsteckteil 20 und dem Anschlussteil 14 bei Auftreten einer einen bestimmten Grenzwert überschreitenden Zugverbindung möglich ist, sondern dass auch zwischen dem Einsteckteil 20 und dem Anschlussteil 14 eine gelenkartige Verbindung besteht, so dass auch ein Lösen der Rastverbindung problemlos erfolgt, wenn die auftretenden Zugkräfte nicht in Richtung der Verbindungsachse A (siehe Fig. 1) zwischen Anschlussteil 14 und Einsteckteil 20 wirken. Des weiteren wird erreicht, dass man bei dieser Art der Verrastung nicht zwischen rechts und links unterscheiden muss, wodurch sich logistische Vorteile beim Hersteller und beim Fahrradhersteller ergeben.

## Patentansprüche

1. Einrichtung zur Befestigung von Streben zur Halterung eines Radschützers am Rahmen eines Zweirades umfassend mindestens ein erstes Teil, an dem mindestens ein Teilstück (15, 16) einer Strebe zur Halterung des Radschützers befestigt werden kann, sowie weiterhin umfassend mindestes ein zweites Teil, das an dem Zweirad befestigbar ist, wobei das erste Teil und das zweite Teil über eine lösbare Verbindung miteinander verbunden sind oder verbindbar sind, die sich dann selbsttätig löst, wenn eine die Teile auseinanderziehende Kraft einen vorgegebenen oder vorgebbaren Grenzwert überschreitet, wobei eines der beiden Teile eine Aufnahme (22) und das andere der beiden Teile einen in diese Aufnahme (22) eingebrachten oder einbringbaren Einsteckabschnitt (23) aufweist, **dadurch gekennzeichnet, dass** die Aufnahme (22) eine zumindest abschnittsweise hohlzylindrische Innenkontur (25) aufweist und dass der Einsteckabschnitt (23) eine zumindest abschnittsweise zylindrische Außenkontur (26) aufweist, wobei das erste Teil und das zweite Teil um die im wesentlichen zusammenfallenden Zylinderachsen der zumindest abschnittsweisen hohlzylindrischen Innenkontur (25) und der zumindest abschnittsweisen zylindrischen Außenkontur (26) gegeneinander verschwenkt werden können, und wobei eine schräge Krafteinleitung zur Lösung der Verbindung von erstem Teil und zweitem Teil in einer Richtung möglich ist, die senkrecht zu den Zylinderachsen ausgerichtet ist.

2. Einrichtung nach Anspruch 1, **dadurch gekennzeichnet, dass** das erste Teil die Aufnahme (22) und das zweite Teil den Einsteckabschnitt (23) aufweisen.

3. Einrichtung nach einem der Ansprüche 1 oder 2, **dadurch gekennzeichnet, dass** die hohlzylindrische Innenkontur (25) beabstandet zu dem Ende der Aufnahme (22) angeordnet ist, das dem mit dem Einsteckabschnitt (23) versehenen Teil zugewandt ist.

4. Einrichtung nach einem der Ansprüche 1 bis 3, **dadurch gekennzeichnet, dass** der Innendurchmesser der hohlzylindrischen Innenkontur (25) größer als der Außendurchmesser der zylindrischen Außenkontur (26) ist.

5. Einrichtung nach einem der Ansprüche 1 bis 4, **dadurch gekennzeichnet, dass** durch das Einbringen des Einsteckabschnitts (23) in die Aufnahme (22) die lösbare Verbindung zwischen erstem Teil und zweiten Teil gebildet wird.

6. Einrichtung nach einem der Ansprüche 1 bis 5, **dadurch gekennzeichnet, dass** die lösbare Verbindung zwischen erstem und zweiten Teil als Rastverbindung ausgebildet ist.

7. Einrichtung nach einem der Ansprüche 1 bis 6, **dadurch gekennzeichnet, dass** das zweite Teil an der dem Einsteckabschnitt (23) gegenüberliegenden Seite ein Ringteil (24) mit einer konzentrischen Mittelbohrung (24a) aufweist zur Aufnahme eines Befestigungselementes zur Befestigung des zweiten Teils an einem Teil des Fahrradrahmens.

8. Einrichtung nach einem der Ansprüche 1 bis 7, **dadurch gekennzeichnet, dass** das erste Teil mindestens eine von der Aufnahme (22) für den Einsteckabschnitt (23) verschiedene weitere Aufnahme (18, 19) umfasst, von der das mindestens eine Teilstück (15, 16) der mindestens einen Strebe zur Halterung des Radschützers aufgenommen werden kann.

9. Anordnung einer Einrichtung zur Befestigung an einer Strebe zur Halterung eines Radschützers am Rahmen eines Zweirades, umfassend eine Einrichtung zur Befestigung mit mindestens einem ersten Teil und eine Strebe mit mindestens einem Teilstück (15, 16), an dem das mindestens eine erste Teil der Einrichtung befestigt ist, **dadurch gekennzeichnet, dass** die Einrichtung eine Einrichtung nach einem der Ansprüche 1 bis 8 ist.

## Claims

1. Device for fixing struts for the fixation of a wheel guard to the frame of a bicycle, comprising at least one first part, to which at least one subsection (15, 16) of a strut for the fixation of the wheel guard can be fixed, and furthermore comprising at least one second part which can be fixed to the bicycle, wherein the first part and the second part are connected or can be connected to each other via a releasable connection which is automatically released if a force pulling the parts apart exceeds a specified or specifiable limit value, wherein one of the two parts has a receptacle (22) and the other of the two parts has a plug-in portion (23) which is inserted or can be inserted into said receptacle (22), **characterized in that** the receptacle (22) has an at least partially hollow-cylindrical inner contour (25), and **in that** the plug-in portion (23) has an at least partially cylindrical outer contour (26), the first part and the second part being able to be pivoted in relation to each other about the substantially coinciding cylinder axes of the at least partial hollow-cylindrical inner contour (25) and of the at least partial cylindrical outer contour (26), and an oblique introduction of force in order to release the connection of the first part and second part in a direction oriented perpendicularly to the cylinder axes being possible.

2. Device according to Claim 1, **characterized in that** the first part has the receptacle (22) and the second part has the plug-in portion (23).

3. Device according to either of Claims 1 and 2, **characterized in that** the hollow-cylindrical inner contour (25) is arranged at a distance from that end of the receptacle (22) which faces the part provided with the plug-in portion (23).

4. Device according to one of Claims 1 to 3, **characterized in that** the inner diameter of the hollow-cylindrical inner contour (25) is larger than the outer diameter of the cylindrical outer contour (26).

5. Device according to one of Claims 1 to 4, **characterized in that** the releasable connection between the first part and second part is formed by inserting the plug-in portion (23) into the receptacle (22).

6. Device according to one of Claims 1 to 5, **characterized in that** the releasable connection between the first and second parts is designed as a latching connection.

7. Device according to one of Claims 1 to 6, **characterized in that** that side of the second part which is opposite the plug-in portion (23) has an annular part (24) with a concentric central bore (24a) for receiving a fixing element for fixing the second part of the bicycle frame.

8. Device according to one of Claims 1 to 7, **characterized in that** the first part comprises at least one further receptacle (18, 19) which differs from the receptacle (22) for the plug-in portion (23) and which can receive the at least one subsection (15, 16) of the at least one strut for the fixation of the wheel guard.

9. Arrangement of a device for fixing to a strut for the fixation of a wheel guard to the frame of a bicycle, comprising a fixing device with at least one first part and a strut with at least one subsection (15, 16) to which the at least one first part of the device is fixed, **characterized in that** the device is a device according to one of Claims 1 to 8.

## Revendications

1. Dispositif pour la fixation de montants pour attacher un garde-boue au cadre d'une bicyclette, comprenant au moins une première partie, sur laquelle peut être fixée au moins une pièce partielle (15, 16) d'un montant pour attacher le garde-boue, et comprenant en outre au moins une deuxième partie qui peut être fixée à la bicyclette, la première partie et la deuxième partie étant connectées ou pouvant être connectées l'une à l'autre par le biais d'une connexion desserrable, qui se desserre automatiquement lorsqu'une force écartant les parties dépasse une valeur limite prédéfinie ou prédéfinissable, l'une des deux parties présentant un logement (22) et l'autre des deux parties présentant une portion d'enfichage (23) introduite ou pouvant être introduite dans ce logement (22), **caractérisé en ce que** le logement (22) présente un contour intérieur (25) au moins en partie cylindrique creux et **en ce que** la portion d'enfichage (23) présente un contour extérieur (26) au moins en partie cylindrique, la première partie et la deuxième partie pouvant être pivotées l'une par rapport à l'autre autour des axes de cylindres substantiellement coïncidents du contour intérieur (25) au moins en partie cylindrique creux et du contour extérieur (26) au moins en partie cylindrique, et une force oblique pour desserrer la connexion de la première partie et de la deuxième partie pouvant être introduite dans une direction qui est orientée perpendiculairement aux axes de cylindres.

2. Dispositif selon la revendication 1, **caractérisé en ce que** la première partie présente le logement (22) et la deuxième partie présente la portion d'enfichage (23).

3. Dispositif selon l'une quelconque des revendications 1 ou 2, **caractérisé en ce que** le contour intérieur cylindrique creux (25) est disposé à distance de l'extrémité du logement (22) qui est tournée vers la partie pourvue de la portion d'enfichage (23).

4. Dispositif selon l'une quelconque des revendications 1 à 3, **caractérisé en ce que** le diamètre intérieur du contour intérieur cylindrique creux (25) est supérieur au diamètre extérieur du contour extérieur cylindrique (26).

5. Dispositif selon l'une quelconque des revendications 1 à 4, **caractérisé en ce que** la connexion desserrable entre la première partie et la deuxième partie est formée par l'introduction de la portion d'enfichage (23) dans le logement (22).

6. Dispositif selon l'une quelconque des revendications 1 à 5, **caractérisé en ce que** la connexion desserrable entre la première et la deuxième partie est réalisée sous forme de connexion par encliquetage.

7. Dispositif selon l'une quelconque des revendications 1 à 6, **caractérisé en ce que** la deuxième partie présente, sur le côté opposé à la portion d'enfichage (23), une partie annulaire (24) avec un alésage central concentrique (24a), pour recevoir un élément de fixation pour la fixation de la deuxième partie à une partie du cadre de la bicyclette.

8. Dispositif selon l'une quelconque des revendications 1 à 7, **caractérisé en ce que** la première partie comprend au moins un autre logement (18, 19) différent du logement (22) pour la portion d'enfichage (23), par lequel l'au moins une pièce partielle (15, 16) de l'au moins un montant pour attacher le garde-boue peut être reçue.

9. Agencement d'un dispositif pour la fixation à un montant pour attacher un garde-boue au cadre d'une bicyclette, comprenant un dispositif de fixation comprenant au moins une première partie et un montant avec au moins une pièce partielle (15, 16), sur laquelle l'au moins une première partie du dispositif est fixée, **caractérisé en ce que** le dispositif est un dispositif selon l'une quelconque des revendications 1 à 8.
